# EUROPÄISCHE PATENTSCHRIFT

(11) **EP 1 857 323 B1**
(45) Veröffentlichungstag und Bekanntmachung des Hinweises auf die Patenterteilung: **11.04.2012**
(21) Anmeldenummer: 07108471.9
(22) Anmeldetag: 18.05.2007
(51) Int. Cl.: B60P 7/15

(54) **Aufbau für die Ladefläche eines Transportfahrzeugs**
Structure of a loading platform of a cargo vehicle
Structure pour un plateau de charge d'un véhicule utilitaire

(30) Priorität: 18.05.2006 DE 102006023672
(43) Veröffentlichungstag der Anmeldung: 21.11.2007
(73) Patentinhaber: Spanset Inter AG, 8618 Oetwil am See (CH)
(72) Erfinder: Franz, Carl, 42111 Wuppertal (DE)
(74) Vertreter: Cohausz & Florack

(56) Entgegenhaltungen:
- EP-A- 1 413 479
- WO-A-2004/043742
- CA-A1- 2 364 885
- DE-U1- 8 525 233
- GB-A- 2 353 253
- US-A1- 2002 139 766

## Beschreibung

Die Erfindung betrifft einen Aufbau für die Ladefläche eines Transportfahrzeugs, insbesondere eines Lastkraftwagens oder eines Aufliegers bzw. Anhängers für einen Lastkraftwagen, mit beabstandet zueinander angeordneten, längs der Ladefläche aufgestellten Rungen, mit zwischen den Rungen angeordneten, längs der Ladefläche ausgerichteten Einstecklatten, die mit ihren kopfseitigen Enden an den Rungen abgestützt sind, und mit mindestens einem Sperrbalken, der sich im Wesentlichen quer zur Längsrichtung der Ladefläche erstreckt und zwischen den Rungen und/oder Einstecklatten angeordnet ist, wobei der Sperrbalken mit jedem seiner Enden mit jeweils einer Einstecklatte oder einer Runge lösbar verbunden ist und eine Diagonalverspannung zum Verspannen des Sperrbalkens vorgesehen ist.

Aufbauten der voranstehend angegebenen, beispielsweise aus der DE 85 25 233 U bekannten Art bilden bei Lastfahrzeugen, insbesondere für Straßenfahrzeuge, wie Lastkraftwagen, Sattelanhänger, Anhänger etc., üblicherweise das Traggerüst für eine Plane, von der das jeweils zu transportierende Gut abgedeckt und vor Witterungseinflüssen geschützt wird. Gleichzeitig stellt ein solcher Aufbau einen wesentlichen Bestandteil der zur Ladungssicherung vorgesehenen Vorrichtungen eines Transportfahrzeuges dar.

Dabei werden derartige Aufbauten danach unterschieden, ob sie dauerhaft fest aufgebaut sind (Festaufbauten) oder aus Einzelteilen zusammengesetzt zur wiederholten Montage und Demontage vorgesehen sind. Während bei Festaufbauten vor allem die Seitenwände die Funktion der Ladungssicherung in Querrichtung miterfüllen, wenn die Ladung für eine formschlüssige Ladungssicherung geeignet ist, sind dafür bei wiederholt montier- und demontierbaren Aufbauten, die üblicherweise aus Traggerüst und darüber gespannter Plane bestehen, jeweils Einzelteile vorhanden.

Bei wiederholt montier- und demontierbaren Aufbauten sind zu diesem Zweck von jeher zwischen die vertikal von der Ladefläche aufragenden Rungen so genannte "Einstecklatten" auf unterschiedlichen Höhen positionierbar. Die Rungen weisen dazu üblicherweise in regelmäßigen Höhenabständen angeordnete Aufnahmen auf, in die die Einstecklatten mit ihren Endabschnitten eingesteckt werden können.

Die betreffenden Aufnahmen an den Rungen sind in der Praxis üblicherweise als Einstecktaschen ausgebildet. Bei Aufbauten, bei denen neben dem Stirnwandeckpfosten und dem Rückwandeckpfosten bei Sattelanhänger-Ladeflächen mit maximal zulässiger Länge üblicherweise drei Mittelrungen längs der seitlichen Begrenzung der Ladefläche positioniert sind, weisen solche nach Art von Einstecktaschen ausgebildete, im Querschnitt üblicherweise U-förmig und nach oben geöffnete Aufnahmen typischerweise eine Breite von 26 bis 27 mm, eine Höhe von 100 - 150 mm und eine Tiefe zwischen 25 - 60 mm auf.

Nach der Montage sind die Einstecklatten mit ihren Enden formschlüssig in der jeweils zugeordneten Aufnahme gehalten. Die wesentliche Sicherungsaufgabe der Einstecklatten besteht dabei darin, das Ladegut gegen die Querkräfte abzustützen, denen es beispielsweise bei einer Kurvenfahrt des Transportfahrzeugs ausgesetzt ist. Wichtig für eine optimale Erfüllung dieser Funktion ist, dass nur ein geringes seitliches Spiel zwischen den abstützenden Einstecklatten und den Außenwänden der Ladung vorhanden ist, damit die Ladung nach einem allenfalls nur kurzen seitlichen Bewegungsweg an den den Laderaum seitlich begrenzenden Einstecklatten anschlagen. Die Einstecklatten müssen dann in der Lage sein, die auf sie treffende bzw. an ihnen anliegende Last sicher aufzunehmen. Insbesondere dürfen sich die Einstecklatten in Folge der quer zur Fahrtrichtung wirkenden Belastungen nicht so stark verbiegen, dass sie aus den Aufnahmen der Rungen herausfallen oder gar brechen. Auch muss die nach außen gebogene Einstecklatte während der Ladungsbelastung die Ladung wieder annhähernd auf ihre alte Stellplatzposition auf der Ladefläche zurückdrücken können. In der Praxis kann es jedoch dazu kommen, dass bei besonders schwerer Ladung nach einer Querbeschleunigung zur Fahrzeuglängsseite die Ladung so stark gegen die Einstecklatten und die Plane gedrückt wird, dass nach dem Wegfall der Beschleunigungskraft die Latten und die Plane keine ausreichende Rückstellkraft besitzen, um die Ladung wieder in ihre Ursprungsstellposition zurückzudrücken. In diesem Zustand hat das Fahrzeug eine unzulässige Überbreite. Bei einer erneuten Querbeschleunigung in die entgegengesetzte Richtung erreicht daraufhin das Ladegut aufgrund des jetzt zur Verfügung stehenden großen Seitenspiels zu den gegenüberliegenden Einstecklatten eine große Geschwindigkeit und damit einhergehend eine hohe kinetische Energie, welche dann auf die Einstecklatten und Plane der gegenüberliegenden Seite trifft und diese zusätzlich belastet. Diese höheren dynamischen Belastungen sind aus Sicherheitsgründen nicht zulässig.

Ein weiterer wichtiger Aspekt beim Transport von Gütern mit Transportmitteln der voranstehend erläuterten Art ist die Sicherung der Ladung gegen eine bzw. entgegen einer Bewegung in Fahrtrichtung. Gerade beim Anfahren oder Abbremsen können so große Beschleunigungen erreicht werden, dass ohne besondere Sicherungsmaßnahmen gerade bei großvolumigeren Körpern die Gefahr eines Umstürzens oder Verrutschens der Ladung besteht. Auch müssen druckempfindliche Ladungen, wie z. B. Chemiefässer, in einzelne Ladeabteilungen durch Sperrbalken separiert werden.

Ein solches Verrutschen oder Umstürzen von Ladungsteilen kann durch so genannte "Sperrbalken" verhindert werden, die üblicherweise quer zur Fahrtrichtung bzw. Ladeflächen-Längsrichtung angeordnet werden. Auf diese Weise lässt sich der zur Verfügung stehende Laderaum in mehrere Segmente unterteilen, in denen dann jeweils nur eine begrenzte Beweglichkeit der Ladung ermöglicht ist. Da die jeweilige Position der Sperrbalken in Längsrichtung der Ladefläche jedoch durch die Abmessung der Ladung bestimmt ist, ist eine solche Befestigung nur in seltenen Fällen an den fest positionierten Rungen möglich. Stattdessen müssen die Sperrbalken an den den Laderaum seitlich begrenzenden Einstecklatten befestigt werden.

Ein LKW-Aufbau der eingangs angegebenen Art, bei dem der Laderaum unter Verwendung eines Sperrbalkens optimiert genutzt werden kann, ist aus der DE 197 06 493 A1 bekannt. Bei diesem bekannten Aufbau weisen die Einstecklatten auf ihrer dem Laderaum zugeordneten Seite Aufnahmeöffnungen auf, in die als Sperrbalken wirkende Querbalken mit ihren geeignet geformten endseitigen Kopfabschnitten lösbar einsteckbar sind.

Zum Stabilisieren der Lage der Querbalken in quer zur Längsachse des Laderaums gerichteter Richtung dient bei dem bekannten Aufbau eine Diagonalstrebe, die sich zwischen einem an der Ladefläche vorgesehenen Befestigungspunkt und einem an dem Querbalken ausgebildeten Befestigungspunkt erstreckt. Die Diagonalstrebe weist eine feste Länge auf und nimmt im praktischen Einsatz Zug- und Druckkräfte auf. Sie wirkt als solche wie die eine diagonal ausgerichtete Aussteifungsstrebe eines Fachwerks, das beim Stand der Technik durch den Querbalken, die Ladefläche und die jeweils zugeordneten Einstecklatten gebildet ist. In Draufsicht auf die Ladefläche betrachtet ist die Diagonalstrebe dabei exakt unterhalb des jeweiligen Querbalkens angeordnet, um den im Laderaum vorhandenen, für das Verstauen von Ladegut nutzbaren freien Raum möglichst wenig einzuschränken.

Auf die derart befestigten Querbalken können bei dem bekannten Aufbau Paletten gelegt werden. Auf diese Weise ist eine doppelstöckige Beladung des jeweiligen LKW's möglich. Der Abstand der Querbalken in Längsrichtung und dementsprechend auch der Abstand der in die Einstecklatten eingeformten Einstecköffnungen richten sich dabei nach den Abmessungen der aufzuladenden, das Transportgut tragenden Paletten.

Der bekannte Aufbau gestattet somit eine deutlich verbesserte Nutzung des im jeweiligen Transportfahrzeug vorhandenen Laderaums. Allerdings wirkt sich dieser Vorteil nur aus, wenn eine mindestens doppelstöckige Beladung des jeweiligen Laderaums gewünscht ist. Problematisch bleibt dabei nach wie vor, dass die Position der Querbalken jeweils nicht im Hinblick auf einen möglichst sicheren Halt des zu transportierenden Gutes bei schnellen Beschleunigungen in Fahrzeug-Längsrichtung gewählt werden kann, sondern dass sie durch die Größe der auf sie aufzulegenden Paletten bestimmt ist.

Darüber hinaus erlaubt es der bekannte Aufbau nicht, die Querbalken in verschiedenen Höhen über der Ladefläche zu montieren. Stattdessen müssen alle Querbalken des bekannten Aufbaus in derselben Höhe angeordnet werden, um sie mit den jeweils zur Verfügung stehenden Diagonalstreben befestigen zu können. Anders lässt sich bei dem bekannten Aufbau in den Laderaum auch kein zweites Stockwerk einziehen, dessen Stockfläche eben ausgebildet ist, um eine problemlose Beladung zu ermöglichen.

Ein weiteres Problem ist die kraftschlüssige Sicherung der Diagonalstrebe am äußeren Rand der Ladefläche in Zug- und Druckrichtung. Hier müssen beim Stand der Technik bauseits am Rand der Ladefläche Vertiefungen unterhalb der Ladefläche mit Strebenarretierung eingearbeitet werden. Somit können nur Fahrzeuge für diese Strebenarretierung verwendet werden, welche extra hierfür vorbereitet sind. Üblicherweise wird dabei aus Kostengründen nur jeweils im Abstand einer doppelten Palettenkantenlänge ein Sperrbalken mit Strebenarretierung auf der Ladefläche vorgesehen.

Praktische Erfahrungen zeigen, dass bei in der Praxis eingesetzten Aufbauten der eingangs angegebenen Art die heute zur Verfügung stehenden Sperrbalken sich entweder nur mit großem Aufwand befestigen lassen oder eine nur unzureichende Sicherheit gegen das Verrutschen von Ladung bei hohen Beschleunigungskräften bieten. Hinzukommt, dass bekannte Aufbauten der voranstehend beschriebenen Art häufig keine ausreichende Stabilität besitzen, um auch beim Auftreten von quer zur Fahrtrichtung gerichteten Kräften, wie sie beispielsweise bei einer Kurvenfahrt entstehen, die Ladung sicher gegen ein Verrutschen zu schützen. Die fehlende Stabilität ist dabei in dem mangelhaften Stabilitäts- / Aufbaugesamtkonzept begründet, das typischerweise aus Stirnwand, Rückwand, Dach und Seitenrungen zusammengesetzt ist.

Ausgehend von dem voranstehend erläuterten Stand der Technik lag der Erfindung die Aufgabe zu Grunde, einen Aufbau für die Ladefläche eines Transportfahrzeugs zu schaffen, der bei einer verbesserten Sicherung der Ladung eine erhöhte Stabilität des gesamten Aufbaus auch gegen durch Querkräfte verursachte Belastungen besitzt.

Diese Aufgabe ist erfindungsgemäß durch die Lehre des Anspruchs 1 gelöst worden. In den auf Anspruch 1 rückbezogenen Ansprüchen sind vorteilhafte Varianten und Ausgestaltungen dieser Lehre angegeben.

Gemäß der Erfindung wird somit bei einem Aufbau für eine Ladefläche wie beim oben beschriebenen Stand der Technik der Sperrbalken mit den Einstecklatten bzw. Rungen verbunden. Die Befestigung an den Einstecklatten hat im Gegensatz zu einer konventionellen Befestigung der Sperrbalken alleine an den Rungen eines solchen Aufbaus einerseits den Vorteil, dass die Position des Sperrbalkens in Längsrichtung der Ladefläche über einen weiten Bereich variiert werden kann. Die durch den Sperrbalken erreichte Segmentierung des Laderaums ist somit bei einem erfindungsgemäßen Aufbau nicht mehr auf die durch die Rungen vorgegebene Aufteilung beschränkt, sondern kann an das Volumen der jeweiligen Ladung unmittelbar angepasst werden. Dabei verbindet der Sperrbalken die jeweils mit seinen Enden verkoppelten Einstecklatten oder Rungen starr miteinander, so dass ein insgesamt steifer Aufbau erreicht wird.

Dabei hat die Erfindung die beim oben beschriebenen Stand der Technik bereits angewendete Möglichkeit der Fixierung der Lage des Sperrbalkens durch eine Diagonalverspannung aufgegriffen. Im Gegensatz zum Stand der Technik ist diese Diagonalverspannung jedoch nicht durch eine feste Strebe gebildet, die Zug- und Druckkräfte aufnehmen kann. Vielmehr wird die Lage des Sperrbalkens quer zur Längsrichtung des Laderaums durch eine Diagonalverzurrung gewährleistet, die durch zwei nur auf Zug belastbare Spannmittel gebildet ist. Diese Spannmittel werden erfindungsgemäß so ausgerichtet, dass sich ihre Wirklinien in Längsrichtung des Laderaums betrachtet kreuzen. Zu diesem Zweck werden die Spannmittel mit ihrem einen Ende jeweils an einem im Bereich der Ladefläche ausgebildeten Befestigungspunkt befestigt und mit ihrem anderen Ende mit dem Sperrbalken verbunden. Durch die Kreuzung der Wirkungslinien der Spannmittel wird erreicht, dass die Lage des Sperrbalkens quer zur Längsrichtung der Ladefläche stets fixiert ist.

Andererseits wird durch die erfindungsgemäß in Kombination mit dem Sperrbalken vorgesehene Diagonalverzurrung zum einen die Lage des Sperrbalkens quer zur Längsrichtung der Ladefläche sicher fixiert. Hierbei bildet der Sperrbalken vom linken Kopfstück bis zum rechten Kopfstück eine in sich starre, nicht verschiebbare Einheit. Die zwei auf Zug belasteten Spannmittel ziehen den rechten und linken Sperrbalkenkopf nach unten in ihre formschlüssige Arretierung. Somit besteht auch bei Verwendung von relativ schwachen Einstecklatten nicht die Gefahr, dass sich die Lage des Sperrbalkens bei einer hohen Belastung quer oder längs zur Ladefläche in Folge einer zu geringen Biegesteifigkeit der Einstecklatten so weit ändert, dass der Sperrbalken seine Sicherungsfunktion nicht mehr erfüllen kann. Stattdessen stellt die Diagonalverzurrung sicher, dass der Sperrbalken stets in einer quer zur Längsrichtung der Ladefläche definierten Position gehalten wird. Auf diese Weise gewährleistet er, dass auch die mit ihm verkoppelten Einstecklatten bei einer Querkraftbelastung nicht übermäßig verformt werden. In gleicher Weise trägt die erfindungsgemäß vorgesehene Kombination aus Diagonalverzurrung und Sperrbalken dazu bei, dass auch die Rungen bei einer Belastung quer zur Längsrichtung der Ladefläche ihre Form und Lage im Wesentlichen unverändert beibehalten. Dieses ist besonders dann von zentraler Bedeutung, wenn das Dach des Aufbaus aufgrund des Fehlens einer ausreichenden Aussteifung keine nennenswerte Quersteifigkeit aufweist und sich die Rungen somit oben am Dachbaum nicht nennenswert abstützen können.

Aufgrund dessen, dass bei einem erfindungsgemäßen Aufbau zum Verspannen der Sperrbalken nur auf Zug belastbare Spannelemente, wie beispielsweise Bänder oder Gurte sowie Seile oder Ketten verwendet werden, ist bei einem erfindungsgemäßen Aufbau im Gegensatz zum oben beschriebenen Stand der Technik, bei dem jeweils eine Strebe fester Länge als diagonal ausgerichtete Aussteifung verwendet worden ist, die Höhe, in der der Sperrbalken angeordnet ist, nicht fest vorgegeben, sondern problemlos an die jeweiligen Gegebenheiten angepasst werden kann. So kann die Länge des jeweiligen Spannmittels ohne jede Schwierigkeit an die zwischen dem der Ladefläche und den dem Sperrbalken zugeordneten Befestigungspunkten verbleibende freie Länge angepasst werden. Dies erlaubt es beispielsweise bei einem Aufbau, der mehrere in Reihen übereinander angeordnete Einstecklatten umfasst, in Abhängigkeit von der Größe des zu sichernden Gutes den Sperrbalken mit jeder dieser Einstecklatten zu verkoppeln, ohne dass dazu ein jeweils speziell angepasstes Spannmittel benötigt wird.

Die auf Zug belasteten Spannelemente können an fast jeder Längenposition beispielsweise an der Unterkante des Außenrahmens rechts und links der Ladefläche eingehakt werden. Durch das Spannen der beiden auf Zug vorgespannten Spannelemente werden die Kopfstücke des Sperrbalkens rechts- und linksseitig nach unten gezogen. Diese nach unten gerichtete Zugkraft ergibt sich durch die Kraftverlegung bei dem Kräftedreieck. Die Zugkraft bewirkt weiterhin, dass die Einstecklatte in ihrer Rungentaschenlagerung nach unten gedrückt wird. Auf diese Weise sind die Seitenlatten und der Sperrbalken bei vertikalen Fahrzeugstößen in ihrer Lagerung zusätzlich gesichert. Die Gefahr eines Herausspringen bzw. von Aufbau-Klappergeräuschen ist so weiter minimiert.

Im Ergebnis steht mit der Erfindung somit ein Aufbau für die Ladefläche eines Transportfahrzeugs zur Verfügung, der sich auf einfache und kostengünstige Weise herstellen lässt und dabei eine erhöhte Stabilität auch beim Auftreten von hohen Querkräften besitzt. Die Baukomponenten dieser Erfindung lassen sich bei ca. 95 % aller am Markt eingesetzten Curtainsider-Aufbauten montieren. Mit einem erfindungsgemäßen Aufbau lässt sich daher eine Ladung mit erhöhter Sicherheit transportieren. Eine raumfüllende Ladung kann somit insgesamt über Formschluss mit dem Aufbau ladungsgesichert werden.

Die erfindungsgemäße Diagonalverzurrung kann in der Praxis dadurch auf einfache und gleichzeitig besonders wirkungsvolle Weise verwirklicht werden, dass dem einen Spannmittel ein erster im Bereich der einen Längsseite der Ladefläche angeordneter Befestigungspunkt und dem anderen Spannmittel ein zweiter im Bereich der anderen Längsseite der Ladefläche angeordneter Befestigungspunkt zugeordnet ist.

Alternativ lassen sich die Spannmittel für eine erfindungsgemäße Verzurrung des Sperrbalkens auch so anordnen, dass sie mit der Ladefläche ein Dreieck einschließen, an dessen Spitze die dem Sperrbalken zugeordneten Befestigungspunkte positioniert sind. In umgekehrter Ausführung dieser Variante können die Spannelemente auch von den Enden des Sperrbalkens schräg in Richtung der Ladefläche aufeinander zulaufend ausgerichtet sein, so dass sich ihre Wirkungslinien in oder kurz vor bzw. kurz nach der Ebene der Ladefläche schneiden.

Eine besonders gute Wirkung der erfindungsgemäßen Verzurrung ergibt sich dabei dann, wenn jeweils ein Ende der Spannmittel zu einem Ende des Sperrbalkens geführt ist.

Gemäß einer weiteren vorteilhaften Ausgestaltung ist der Sperrbalken mit seinen Enden mit den ihm zugeordneten Einstecklatten oder Rungen formschlüssig verbunden. Eine solche formschlüssige Verbindung hat insbesondere unter den in der Praxis gegebenen rauen Arbeitsbedingungen den Vorteil, dass sie sich einerseits einfach und schnell montieren und demontieren lässt und andererseits einen sicheren Halt des Sperrbalkens an den jeweiligen Einstecklatten gewährleistet. Dabei ist es im Hinblick auf die einfache Montierbarkeit und die Möglichkeit, Toleranzen des Abstands der einander gegenüberliegenden Rungen oder Einstecklatten auszugleichen, günstig, wenn die formschlüssige Verbindung spielbehaftet ist.

Um eine einfache formschlüssige Verbindung von Sperrbalken und Einstecklatten bzw. Rungen zu ermöglichen, können bei einem erfindungsgemäßen Aufbau mindestens die dem Sperrbalken zugeordneten Einstecklatten Öffnungen aufweisen, in die der Sperrbalken mit einem an ihm ausgebildeten hakenartigen Vorsprung greift, um die formschlüssige Verbindung herzustellen. Dabei ist es zur Vermeidung von Beschädigungen bei fehlerhafter Handhabung günstig, wenn die von dem hakenförmigen Vorsprung umgriffene Hakenöffnung so bemessen ist, dass der Vorsprung bei nur einseitiger Verbindung des Sperrbalkens mit Spiel hinter die die Öffnung der jeweiligen Einstecklatte begrenzende Wand greift. Gleichzeitig ist es für diesen Zweck günstig, wenn die Öffnungen der Einstecklatten eine Höhe haben, die um ein Übermaß größer ist als die Höhe des Vorsprungs, wobei das Übermaß ausreicht, um den Vorsprung spielbehaftet in die Öffnungen einführen zu können. Durch diese Formgebung kann die formschlüssige Verbindung dann, wenn der Sperrbalken irrtümlich nur mit einer der Einstecklatten verhakt worden ist, auf einfache Weise wieder gelöst werden und es stehen genügend Freiheitsgrade der Bewegung zur Verfügung, um den Sperrbalken gleichzeitig in die Öffnungen zweier gegenüberliegender Einstecklatten einzuhaken. Auf diese Weise kann bei einer Fehlbedienung der nur einseitig eingehakte Sperrbalken mit der nicht arretierten Seite nach unten auf den Ladeboden fallen, ohne dass an der Einstecklatte bzw. der Runge, mit der der Sperrbalken dabei jeweils verhakt ist, es zu einer Beschädigung durch Verzwängung kommen kann. Unterstützt werden kann dies zusätzlich dadurch, dass der Vorsprung eine Länge aufweist, welche unter Berücksichtigung der Länge des Sperrbalkens und in Kombination mit dem Spiel ausreicht, um den hakenförmigen Vorsprung in die Öffnung der Einstecklatte oder der Runge kraftfrei einzuhaken, während das andere Ende des Sperrbalkens auf der Ladefläche aufliegt.

Die Vielseitigkeit eines erfindungsgemäßen Aufbaus kann weiter dadurch gesteigert werden, dass die dem Sperrbalken zugeordneten Einstecklatten eine Vielzahl von längs der Einstecklatten verteilter bevorzugt in regelmäßigen Abständen angeordneter Öffnungen aufweist.

In einem erfindungsgemäß ausgebildeten Aufbau eingesetzte Einstecklatten können in an sich bekannter Weise als Hohlprofile ausgebildet sein, das beispielsweise aus einem Leichtmetallwerkstoff, wie einem Aluminiumwerkstoff, hergestellt ist. Eine besonders biegesteife Konstruktion der Einstecklatten ergibt sich in diesem Zusammenhang dann, wenn die Einstecklatten zwei sich längs der Einstecklatten erstreckende und beabstandet zueinander angeordnete Kastenabschnitte aufweisen, die über einen Wandabschnitt miteinander verbunden sind. Der gerade beim Auftreten von Querkräften im Wesentlichen unbelastete Wandabschnitt eignet sich dabei in besonderer Weise für die Anordnung der Öffnungen.

Eine Anpassung der Länge der Sperrbalken für unterschiedlich breite Ladeflächen kann dadurch ermöglicht werden, dass die Länge des Sperrbalkens in an sich bekannter Weise mindestens einmal verstellbar wobei die jeweilige Verstellstellung arretierbar sein sollte.

Um die Verbindung zwischen dem Sperrbalken und der Diagonalverzurrung leicht herstellen zu können, kann im Bereich der Endabschnitte des Sperrbalkens jeweils ein Befestigungspunkt zum Ankoppeln des Spannmittels der Diagonalverzurrung ausgebildet sein.

Grundsätzlich sind für die Diagonalverzurrung alle Spannmittel geeignet, die in der Lage sind, die Endabschnitte des Sperrbalkens mit der ihnen jeweils gegenüberliegenden Seite der Ladefläche zu verspannen. Besonders einfach handhabbar wird ein erfindungsgemäßer Aufbau jedoch dann, wenn als Spannmittel zwei Gurte oder Bänder mit jeweils einer Spanneinrichtung eingesetzt werden und jedem Ende des Sperrbalkens jeweils eines dieser Spannmittel zugeordnet ist.

Ein optimaler Schutz der Diagonalverzurrung und des Ladeguts gegen eine Beschädigung kann dadurch gewährleistet werden, dass bei montiertem Sperrbalken und montierter Diagonalverzurrung die zum Befestigen des Spannmittels im Bereich der Ladefläche vorgesehenen Befestigungspunkte so angeordnet sind, dass die Spannmittel in Draufsicht unterhalb des Sperrbalkens verlaufen. Bei dieser Ausgestaltung ist die Diagonalverzurrung unter dem Sperrbalken angeordnet, so dass bei entsprechender Ausrichtung des Sperrbalkens ein direkter Kontakt zwischen Verzurrung und Ladegut weitestgehend ausgeschlossen werden kann.

Dadurch, dass das Spannmittel unterhalb des Sperrbalkens im so genannten toten Bereich liegt, kann bei einem erfindungsgemäßen Aufbau das Spannmittel, wie z. B. eine Spannratsche, nicht durch Ladungsdruck der hinten stehenden Ladung gegen die davor stehende Ladung gedrückt werden. Auch empfindliche Verpackungen sind so vor einer Beschädigung sicher geschützt.

Auch der Sperrbalken lässt sich unter Verwendung eines insbesondere aus einer Leichtmetalllegierung erzeugten Hohlprofils herstellen. Dabei kann es im Hinblick auf eine einfache Fertigung bei gleichzeitig maximaler Gewichtsersparnis günstig sein, wenn das Hohlprofil endseitig Kopfstücke trägt, die zum Ankoppeln des Sperrbalkens an die dem jeweiligen Ende des Sperrbalkens zugeordnete Einstecklatte bestimmt sind. Diese Aufteilung ermöglicht es, für die Kopfstücke und den Hauptkörper des Sperrbalkens jeweils hinsichtlich ihrer Funktion und ihres Gewichts optimierte Werkstoffe zu verwenden. Dabei ergibt sich eine besonders einfache Konstruktion, wenn das Hohlprofil und die Kopfstücke miteinander verschweißt oder verschraubt sind.

Alternativ können an dem Hohlprofil Aufnahmen zum formschlüssigen Halten des Kopfstücks ausgebildet sein. Dies kann beispielsweise dadurch bewerkstelligt werden, dass der Sperrbalken im Bereich mindestens eines seiner Endabschnitte eine Führung für das diesem Endabschnitt zugeordnete Kopfstück aufweist. Die Lage der Kopfstücke in dem Hohlprofil kann zusätzlich durch geeignete Befestigungsmittel, wie Schraub- oder Klemmverbindungen, kraftschlüssig fixiert werden. Dabei kann das jeweilige Befestigungsmittel beispielsweise zusätzlich als Befestigungspunkt für die Spannmittel der Diagonalverzurrung genutzt werden. So lässt sich beispielsweise der Kopf einer für die Befestigung eines Kopfstücks vorgesehnen Schraube als Öse ausbilden, in die ein als Spannmittel vorgesehener Gurt über einen mit ihm verbundenen Haken eingehakt werden kann.

Der zum Eingriff in die Öffnungen der Einstecklatten vorgesehene hakenförmige Vorsprung kann bezogen auf die Längsachse des Sperrbalkens außermittig angeordnet sein, um eine möglichst große Freiheit bei der Positionierung des Sperrbalkens zu erreichen. Zu diesem Zweck kann das Kopfstück versetzt zur Längsachse des Sperrbalkens angeordnet sein.

Ist beispielsweise der Vorsprung in Draufsicht um ein Viertel der Breite des Sperrbalkens gegenüber dessen Längsachse versetzt, so kann durch Wenden des Sperrbalkens dessen Position in Längsrichtung der Ladefläche um die halbe Breite des Sperrbalkens variiert werden.

Um den Sperrbalken sicher greifen und halten zu können, können an dem Sperrbalken eine sich insbesondere über dessen gesamte Länge erstreckende Griffnut oder ein entsprechender Vorsprung ausgebildet sein.

Auch ist eine Aufrauung (Riffelung) der Sperrbalken-Seitenflanken (rechts und links) auf einer begrenzten Breite möglich, um seine manuelle Handhabbarkeit zu verbessern.

Nachfolgend wird die Erfindung anhand einer ein Ausführungsbeispiel darstellenden Zeichnung näher erläutert. Es zeigen jeweils schematisch:
- Fig. 1: einen Aufbau für eine Ladefläche eines Transportfahrzeugs in Draufsicht;
- Fig. 2: den Aufbau gemäß Fig. 1 in einem Schnitt entlang der in Fig. 1 eingezeichneten Schnittlinie X-X;
- Fig. 3: den Ausschnitt A von Fig. 2 in einer vergrößerten Darstellung;
- Fig. 4: eine der Fig. 3 entsprechende Darstellung des Aufbaus bei der Montage eines Sperrbalkens bzw. bei einer fehlerhaften Handhabung;
- Fig. 5: den Aufbau in einem Schnitt entlang der in Fig. 2 eingezeichneten Schnittlinie Y-Y.
- Fig. 6: den Aufbau in einem Schnitt entlang der in Fig. 5 eingezeichneten Schnittlinie Z-Z;
- Fig. 7a-7c: den Aufbau in einer ausschnittsweisen vergrößerten Ansicht von Fig. 2 in drei Arbeitsschritten während der Montage;
- Fig. 8: ein anderer Aufbau für eine Ladefläche eines Transportfahrzeugs in einer der Fig. 2 entsprechenden Ansicht;
- Fig. 9: ein dritter Aufbau für eine Ladefläche eines Transportfahrzeugs in einer den Fig. 2 und 8 entsprechenden Ansicht.

Der Aufbau 1 ist auf der Ladefläche 2 eines hier weiter nicht dargestellten Transportfahrzeugs errichtet, bei dem es sich beispielsweise um einen Lastkraftwagen mit einem entlang seiner Längsseite beladbaren "Curtainsider"-Auflieger handeln kann. Der Aufbau 1 umfasst dabei neben seinen in den Eckbereichen der Ladefläche 2 angeordneten Eckpfosten 3a - 3d Rungen 4a - 4f, die in regelmäßigen Abständen längs der Längsseiten der Ladefläche 2 angeordnet sind.

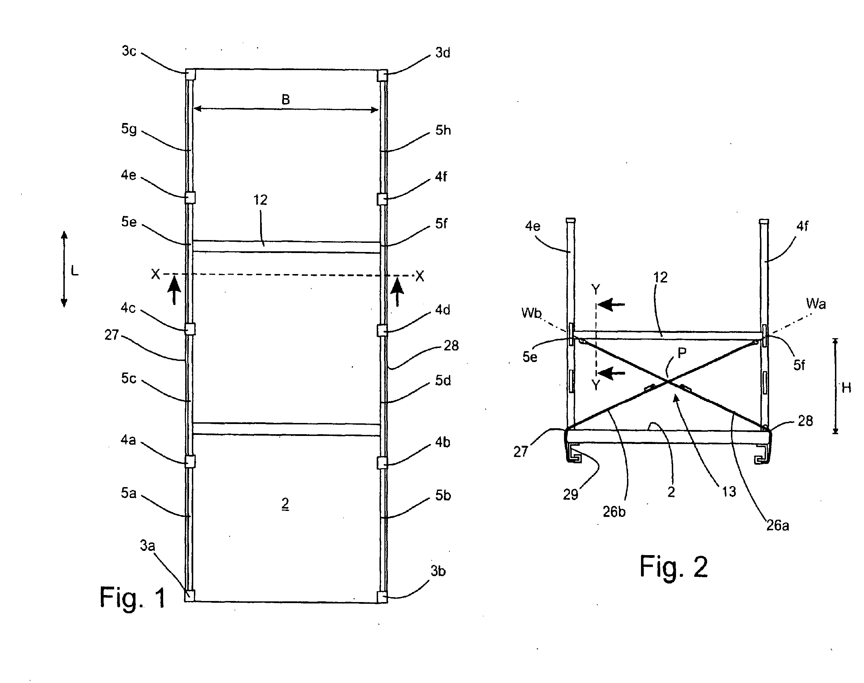

Zur seitlichen Abstützung einer auf der Ladefläche 2 gestellten Last erstreckt sich zwischen den in Längsrichtung L der Ladefläche 2 zueinander benachbarten Eckpfosten bzw. Rungen 3a,4a;4a;4c;4c,4e;4e;3c (in Fig. 1 linke Längsseite der Ladefläche 2) 3b,4b;4b,4d;4d,4f;4f,3d (in Fig. 1 rechte Längsseite der Ladefläche 2) jeweils eine Einstecklatte 5a - 5h. Jede der Einstecklatten 5a - 5h ist beispielsweise als einstückig strangepresstes Aluminiumprofil ausgebildet, das an seiner in Montagestellung oberen und unteren Längsseite jeweils einen im Querschnitt rechteckigen Kastenabschnitt 8,9 und einen die Kastenabschnitte 8,9 miteinander verbindenden Wandabschnitt 10 umfasst. Alternativ zu einem stranggepressten Leichtmetallprofil können die Einstecklatten 5a-5h auch aus profiliertem Stahlblech hergestellt sein.

In den Wandabschnitt 10 sind in regelmäßigem Abstand in Längsrichtung L der Einstecklatten 5a - 5h verteilte rechtwinklige Öffnungen 11,11' eingeformt. Die Einstecklatten 5a - 5f sind in an sich bekannter Weise in hier nicht dargestellte Aufnahmetaschen der Rungen 4a - 4f eingehängt.

Zwischen den Einstecklatten 5e,5f erstreckt sich quer zur Längsrichtung L der Ladefläche 2 ein Sperrbalken 12, der mittels einer als Diagonalverspannung dienenden Diagonalverzurrung 13 gegen die Ladefläche 2 verzurrt ist. Der Sperrbalken 12 umfasst ein Hohlprofilteil 14, das annähernd die gesamte Breite B der Ladefläche 2 überspannt. Das Hohlprofilteil 14 weist eine rechteckige Grundform auf, wobei in seinem in Montagestellung oberen Teil eine Griffmulde 15 mit einer darüber angeordneten seitlich vorspringenden Nase 16 ausgebildet ist, die sich über die gesamte Länge des Hohlprofilteils 14 erstreckt und eine einfache und sichere Handhabung des Sperrbalkens 12 bei seiner Montage ermöglicht. Alternativ oder ergänzend kann an dem Hohlprofilteil 14 auch eine hier nicht gezeigte Aufrauung oder Hohlkehle vorgesehen sein, damit der Benutzer den Sperrbalken 12 möglichst einfach mit der Hand halten kann.

In dem Hohlprofilteil 14 ist an dessen in Montagestellung oberer Wand ein in Richtung des Innenraums des Hohlprofilteils 14 vorstehender Vorsprung 17 ausgebildet. Der Vorsprung 17 ist dabei in einem Abstand zur Innenfläche des Griffmuldenbereichs des Hohlprofilteils 14 angeordnet. Entsprechend beabstandete Vorsprünge 18,19 sind gegenüberliegend an der Innenseite der in Montagestellung unteren Wand des Hohlprofilteils 15 ausgebildet.

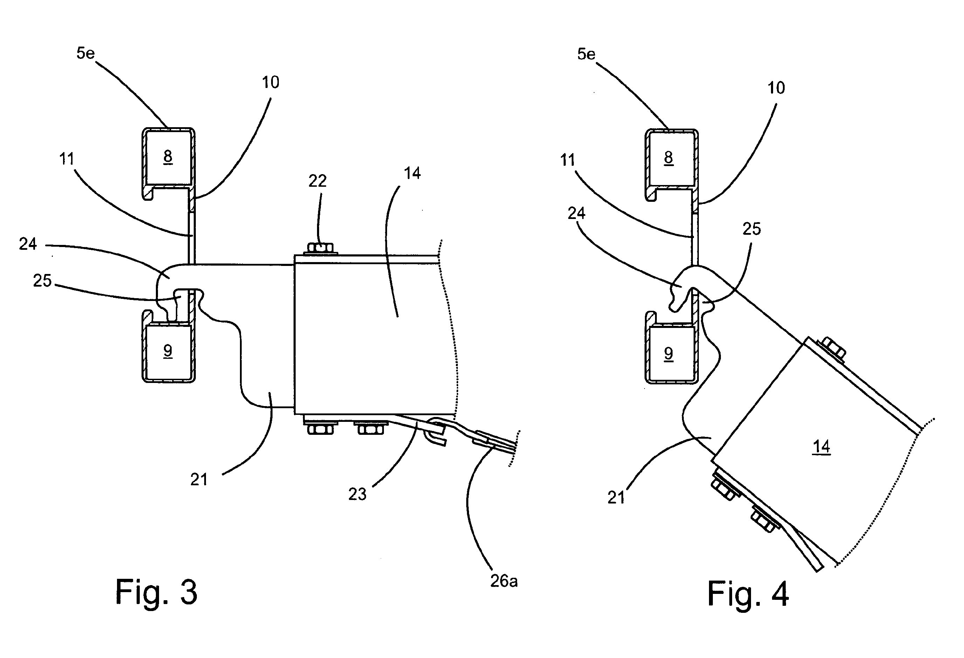

Die Vorsprünge 17 - 19 bilden zusammen mit der Innenfläche des Griffmuldenbereichs eine Führung 20 für jeweils ein Kopfstück 21, das von der jeweiligen Stirnseite des Hohlprofilteils 14 in dieses eingeschoben ist. Jeder der beiden Endabschnitte des Sperrbalkens 12 trägt ein solches Kopfstück 21,21' wobei in den Figuren 3 und 4 beispielhaft das der Einstecklatte 5e zugeordnete Kopfstück 21 dargestellt ist.

Die in das eine Ende des Hohlprofilteils 14 eingeschobenen Kopfstücke 21 sind so formschlüssig in der Führung 20 gehalten, dass sie nur parallel zur Längsachse des Hohlprofilteils 14 verschoben werden können. Dabei ist die Führung 20 so angeordnet, dass die Längsachse des Hohlprofilteils 14 versetzt gegenüber der Längsachse der Kopfstücke 21 verläuft. Diese bezogen auf das Hohlprofilteil 14 außermittige Anordnung der Kopfstücke 21 kann dabei beispielsweise so gewählt werden, dass der Versatz der Längsachse der Kopfstücke 21 gegenüber der Längsachse des Hohlprofilteils 14 etwa 25 % des Abstandes der Öffnungen 11 der Einstecklatten 5e,5f entspricht. Auf diese Weise beträgt das mögliche kleinste Rastermaß M des zu positionierenden Sperrbalkens 12 in Längsrichtung L gesehen etwa 50 % des Abstandes A der Öffnungen 11 der Einstecklatten 5e,5f.

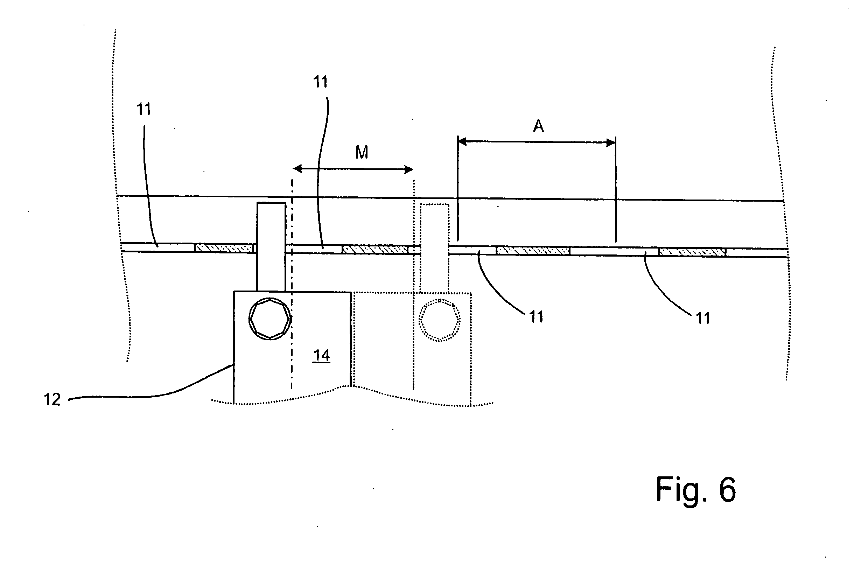

Die entsprechenden Abmessungen sind in Fig. 6 nicht maßstäblich angedeutet. Durch Wenden der Sperrbalken 12 kann das kleinste Rastermaß M ausgeschöpft werden, um die Lage des Sperrbalkens 12 optimal an die Position der jeweils dem Sperrbalken 12 zugeordneten Seitenfläche des zu sichernden, hier nicht dargestellten Ladeguts anzupassen (Fig. 6).

Durch als Befestigungsmittel dienende Schrauben 22 ist die Lage der Kopfstücke 21 in dem Hohlprofilteil 14 kraftschlüssig im Zusammenhang mit den Vorsprüngen 17 - 19 und der sich ergebenden Führung 20 fixiert. Die Schrauben 22 halten gleichzeitig eine auf der Außenfläche der in Montagestellung unteren Wand des Hohlprofilteils anliegende Öse 23. Das der Einstecklatte 5f zugeordnete Kopfstück 21' ist an dessen anderem Ende in derselben Weise wie das Kopfstück 21 im Hohlprofilteil 14 gehalten.

Jedes Kopfteil 21,21' des Sperrbalkens 12 weist an seinem frei über das Hohlprofilteil 14 hinausstehenden Endabschnitt einen hakenförmigen Vorsprung 24 auf, der in Montagestellung in eine der Öffnungen 11,11' der diesem Kopfstück 21,21' jeweils zugeordneten Einstecklatte 5e bzw. 5f greift. Die vom Vorsprung 24 umgriffene Hakenöffnung 25 ist dabei derart ausgeformt, dass der Vorsprung 24 mit Spiel in der jeweiligen Öffnung 11,11' sitzt, bis der Sperrbalken 12 mit seinen beiden Enden in die jeweils zugeordnete Einstecklatte 5e,5f eingesteckt ist.

Das Spiel, mit dem der Vorsprung 24 in die Öffnung 11,11' greift, ist dabei so bemessen, dass es bei einer fehlerhaften Montage zu keinem Verkannten des Sperrbalkens 12 in der Öffnung 11,11' kommen kann. Dabei ist die Höhe Ho der Öffnung 11 so auf die Höhe Hv und Länge Lv des Vorsprung abgestimmt, dass der Sperrbalken 12 bei seiner Montage mit seinem Vorsprung 24 zunächst so weit durch die Öffnung 11 geführt werden kann, dass der Vorsprung 24' des gegenüberliegenden Kopfstücks 21' frei in die ihm zugeordnete Öffnung 11' der Einstecklatte 5f eingeführt werden kann. Anschließend wird der Sperrbalken 12 so gegen die Einstecklatte 5f bewegt, dass die Vorsprünge 24,24' beider Kopfstücke 21,21' in die ihnen zugeordneten Öffnungen 11,11' der Einstecklatten 5e,5f greifen. Dann kann der Sperrbalken 12 abgesenkt werden, so dass er nach Aufzehrung eines geringen Luftspiels formschlüssig hinter den die jeweilige Öffnung 11,11' unten begrenzenden Wandabschnitt greift.

Die Abmaße der Öffnungen 11,11' und der Vorsprünge 24,24' sind zudem so aufeinander abgestimmt, dass der Sperrbalken 12 bei einer Fehlbedienung, bei der der Sperrbalken 12 nur an einer Seite eingehakt und dann fallengelassen wird, mit der dann nicht arretierten Seite nach unten auf den Ladeboden 2 fallen kann, ohne dass die Wand 10 der jeweiligen Einstecklatte 5e,5f verbogen wird. Bei zwischen den Einstecklatten 5e,5f eingelegtem Sperrbalken 12 hat der jeweilige hakenförmige Vorsprung 24,24' im Bereich seiner Hakenöffnung 25 zudem geringe Freiräume 30,31 zur die Öffnung 11 begrenzenden Wand 10, um Breitentoleranzen zwischen dem starren Sperrbalken 12 und den Einstecklatten 5e,5f auszugleichen.

Nach dem Einhaken des Sperrbalkens 12 in die Einstecklatten 5e,5f wird der Sperrbalken 12 mittels der Diagonalverzurrung 13 gegen die Ladefläche 2 verspannt. Zu diesem Zweck umfasst die Diagonalverspannung zwei konventionelle Spanngurte 26a,26b, die mit ihrem einen Ende über einen Haken in jeweils eine der im Bereich der Kopfstücke 21 befestigten Ösen 23 eingehängt werden. Die Spanngurte 26a,26b werden dann zur jeweils anderen Längskante 27,28 der Ladefläche 2 geführt. So wird der Spanngurt 26a, der mit dem der Längskante 27 zugeordneten Kopfstück 21 verkoppelt ist, zur gegenüberliegenden Längskante 28 der Ladefläche 2 geführt, während der mit dem der Längskante 28 zugeordneten Kopfstück verkoppelte Spanngurt 26b zur anderen Längskante 27 geführt wird. Im Bereich der Längskanten 27,28 werden die freien Enden der Spanngurte 25,26 mit jeweils einem Profilteil des Außenrahmens 29 verhakt, das die Ladefläche 2 trägt. Die Spanngurte 26a,26b werden dabei so ausgerichtet, dass sie von oben gesehen (Fig. 1) im Wesentlichen direkt unterhalb des Sperrbalkens 12 verlaufen.

In Längsrichtung L der Ladefläche 2 gesehen schneiden sich bei dieser Anordnung die Wirklinien Wa,Wb der Spannmittel 26a,26b in einem Kreuzungspunkt P, der etwas oberhalb der halben Höhe H liegt, in der die Unterseite des Sperrbalkens 12 oberhalb der Ladefläche 2 angeordnet ist.

Der Sperrbalken 12, die Diagonalverzurrung 13 sowie die Einstecklatten 5a-5h ergeben so gemeinsam mit der Planenabdeckung durch die erfindungsgemäße Befestigung des Sperrbalkens ein insgesamt formstabiles Aufbaugesamtsystem.

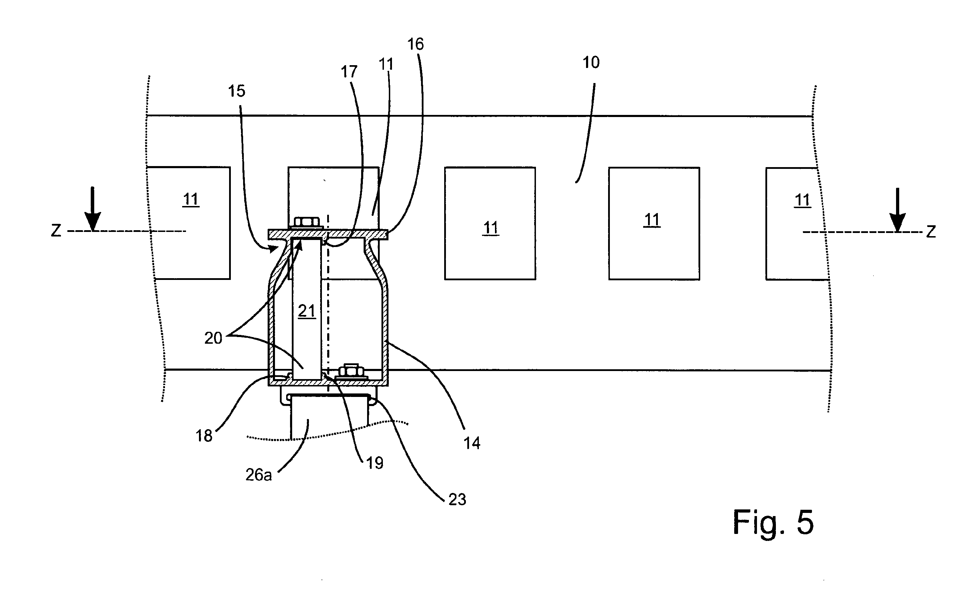

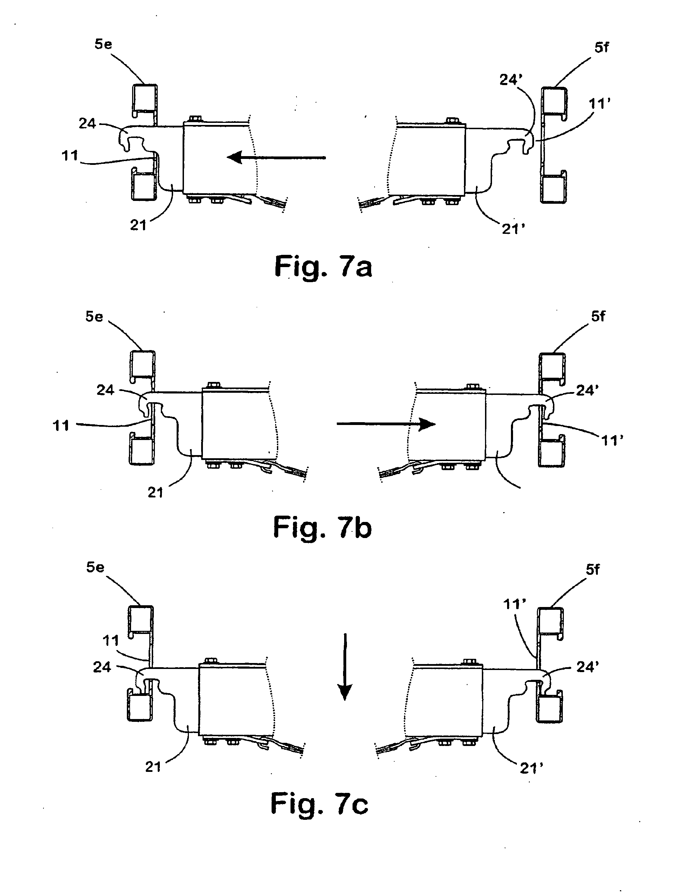

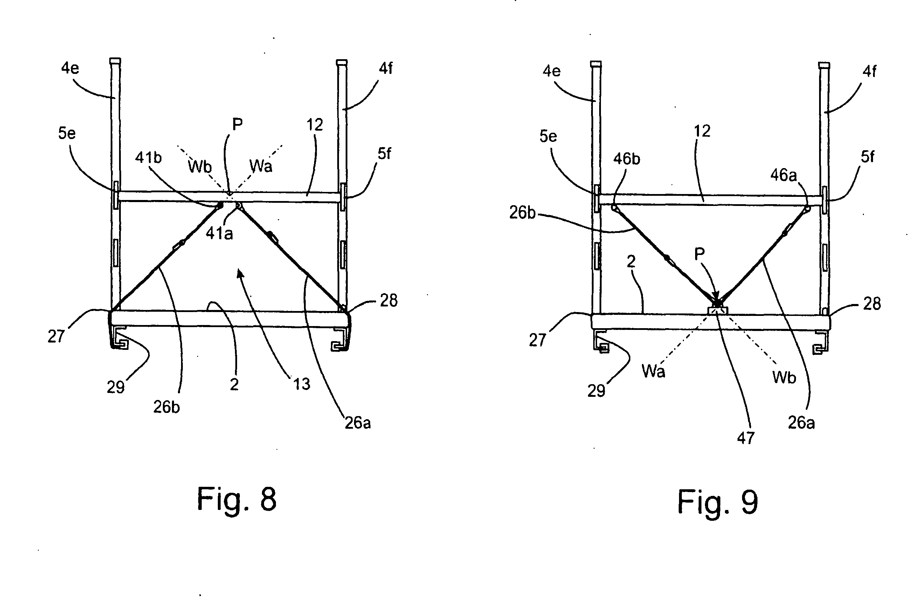

Der in Fig. 8 gezeigte Aufbau 40 entspricht hinsichtlich der Anordnung seiner Rungen 4e - 4f, seiner Einstecklatten 5e,5f, seinem Sperrbalken 12 sowie der übrigen Bauteile des Fahrzeugs dem in den Fig. 1 - 7c dargestellten Aufbau 1. Auch sind die Spannmittel 26a,26b wie beim Aufbau 1 mit ihrem einen Ende am Außenrahmen des Fahrzeugs befestigt und über die jeweilige Längskante 27,28 gelenkt. Im Unterschied zum Aufbau 1 sind jedoch beim Aufbau 40 die Spannmittel 26a,26b mit ihrem dem Sperrbalken 2 zugeordneten Ende zu jeweils einem Befestigungspunkt 41a,41b geführt. Diese Befestigungspunkte 41a,41b sind eng benachbart zueinander in der Mitte des Sperrbalkens 12 an dessen Unterseite angeordnet, so dass bei der in Fig. 8 dargestellten Ansicht die Spannmittel 26a,26b mit der Ladefläche 2 ein Dreieck einschließen, dessen Spitze in Richtung des Sperrbalkens 12 weisen. Die Wirklinien Wa,Wb der Spannmittel 26a,26b schneiden sich dabei in Längsrichtung der Ladefläche betrachtet (Fig. 8) kurz oberhalb des Sperrbalkens 12.

Der in Fig. 9 gezeigte Aufbau 45 unterscheidet sich von den in Fig. 2 und Fig. 8 gezeigten Aufbauten 1 und 40 lediglich dadurch, dass die Spannmittel 26a,26b ausgehend von den in den Endbereichen des Sperrbalkens 12 angeordneten Befestigungspunkten 46a,46b aufeinander zulaufend in Richtung von einem gemeinsamen Befestigungspunkt 47 angeordnet sind, der bezogen auf den Sperrbalken 12 mittig auf der Ladefläche 2 ausgebildet ist. Auf diese Weise kreuzen sich die Wirkungslinien Wa,Wb der Spannmittel 26a,26b im Befestigungspunkt 47 selbst.

### BEZUGSZEICHEN

- 1,40,45: Aufbauten
- 2: Ladefläche
- 3a - 3d: Eckpfosten
- 4a - 4f: Rungen
- 5a - 5h: Einstecklatten
- 8,9: Kastenabschnitt der Einstecklatten 5a - 5h
- 10: Wandabschnitt der Einstecklatten 5a - 5h
- 11,11': Öffnungen
- 12: Sperrbalken
- 13: Diagonalverzurrung
- 14: Hohlprofilteil
- 15: Griffmulde
- 16: Nase
- 17 - 19: Vorsprünge
- 20: Führung
- 21,21': Kopfstück
- 22: Schrauben
- 23: Öse
- 24,24': hakenförmiger Vorsprung
- 25: Hakenöffnung
- 26a,26b: Spanngurte
- 27,28: Längskanten der Ladefläche 2
- 29: Außenrahmen der Ladefläche 2
- 30,31: Freiräume im Bereich der Hakenöffnung 25
- 41a,41b: Befestigungspunkte
- 46a,46b: Befestigungspunkte
- 47: gemeinsamer Befestigungspunkt
- A: Abstand der Öffnungen 11 der Einstecklatten 5e,5f
- B: Breite der Ladefläche 2
- H: Höhe, in der die Unterseite des Sperrbalkens 12 oberhalb der Ladefläche 2 angeordnet ist
- Ho: Höhe der Öffnung 11
- Hv: Höhe des Vorsprungs 24
- Lv: Länge des Vorsprungs 24
- L: Längsrichtung der Ladefläche 2
- M: kleinstes Rastermaß des zu positionierenden Sperrbalkens 12
- P: Kreuzungspunkt der Wirklinien 26a,26b
- Wa,Wb: Wirklinien der Spannmittel 26a,26b

## Patentansprüche

1. Aufbau für die Ladefläche (2) eines Transportfahrzeugs, insbesondere eines Lastkraftwagens oder eines Aufliegers bzw. Anhängers für einen Lastkraftwagen, mit beabstandet zueinander angeordneten, längs der Ladefläche (2) aufgestellten Rungen (4a-4f), mit zwischen den Rungen (4a-4f) angeordneten, längs der Ladefläche (2) ausgerichteten Einstecklatten (5a-5h), die mit ihren kopfseitigen Enden an den Rungen (4a-4f) abgestützt sind, und mit mindestens einem Sperrbalken (12), der sich quer zur Längsrichtung (L) der Ladefläche (2) erstreckt und zwischen den Rungen (4a-4f) und/oder Einstecklatten (5a-5h) angeordnet ist, wobei der Sperrbalken (12) mit jedem seiner Enden mit jeweils einer Einstecklatte (5a-5h) oder einer Runge (4a-4f) lösbar verbunden ist und eine Diagonalverspannung (13) zum Verspannen des Sperrbalkens (12) vorgesehen ist, **dadurch**
**gekennzeichnet, dass** die Diagonalverspannung als Diagonalverzurrung (13) ausgebildet ist, die durch zwei nur auf Zug belastbare Spannmittel (26a,26b) hergestellt ist, welche mit ihrem einen Ende jeweils an einem im Bereich der Ladefläche ausgebildeten Befestigungspunkt befestigt und mit ihrem anderen Ende mit dem Sperrbalken derart verbunden sind, dass sich ihre Wirklinien in Längsrichtung des Laderaums betrachtet kreuzen.

2. Aufbau nach Anspruch 1, **dadurch**
**gekennzeichnet, dass** dem einen Spannmittel (26a) ein erster im Bereich der einen Längsseite der Ladefläche angeordneter Befestigungspunkt und dem anderen Spannmittel (26b) ein zweiter im Bereich der anderen Längsseite der Ladefläche angeordneter Befestigungspunkt zugeordnet ist.

3. Aufbau nach einem der voranstehenden Ansprüche,
**dadurch gekennzeichnet, dass** jeweils ein Ende der Spannmittel (26a,26b) zu einem Ende des Sperrbalkens geführt ist.

4. Aufbau nach einem der voranstehenden Ansprüche,
**dadurch gekennzeichnet, dass** der Sperrbalken (12) mit den ihm jeweils zugeordneten Einstecklatten (5a-5h) oder Rungen (4a-4f) formschlüssig, insbesondere spielbehaftet formschlüssig, verbunden ist.

5. Aufbau nach Anspruch 4, **dadurch**
**gekennzeichnet, dass** mindestens die dem Sperrbalken (12) zugeordneten Einstecklatten (5a-5f) Öffnungen (11) aufweisen, in die der Sperrbalken (5a-5h) mit einem an ihm ausgebildeten hakenartigen Vorsprung (24) greift, um die spielbehaftete formschlüssige Verbindung herzustellen.

6. Aufbau nach Anspruch 5, **dadurch**
**gekennzeichnet, dass** die von dem hakenförmigen Vorsprung (24) umgriffene Hakenöffnung (25) so bemessen ist, dass der Vorsprung (24) bei nur einseitiger Verbindung des Sperrbalkens (12) mit Spiel (30,31) hinter die die Öffnung (11) der jeweiligen Einstecklatte (5a-5h) begrenzende Wand (10) greift.

7. Aufbau nach Anspruch 6, **dadurch**
**gekennzeichnet, dass** der Vorsprung (24) eine Länge (Lv) aufweist, welche unter Berücksichtigung der Länge des Sperrbalkens (12) und in Kombination mit dem Spiel (30,31) ausreicht, um den hakenförmigen Vorsprung (24) in die Öffnung (11) der Einstecklatte (5a-5h) oder der Runge (4a-4f) kraftfrei einzuhaken, während das andere Ende des Sperrbalkens (12) auf der Ladefläche (2) aufliegt oder - bei einem horizontal gehaltenen Sperrbalkens (12) - das gegenüberliegende Ende auf der Laderaumseite vor dem Wandabschnitt (10) der Einstecklatte (5a-5h) endet.

8. Aufbau nach einem der Ansprüche 5 bis 7, **dadurch gekennzeichnet, dass** die dem Sperrbalken (12) zugeordneten Einstecklatten (5a-5h) eine Vielzahl von längs der Einstecklatten (5a-5h) verteilte Öffnungen (11) aufweist.

9. Aufbau nach Anspruch 8, **dadurch**
**gekennzeichnet, dass** die Öffnungen (11) in regelmäßigen Abständen (A) angeordnet sind.

10. Aufbau nach einem der voranstehenden Ansprüche,
**dadurch gekennzeichnet, dass** die Einstecklatten (5a-5h) als Hohlprofile ausgebildet sind.

11. Aufbau nach Anspruch 10, **dadurch**
**gekenntzeichnet**, **dass** die Einstecklatten (5a-5h) zwei sich längs der Einstecklatten (5a-5h) erstreckende und beabstandet zueinander angeordnete Kastenabschnitte (8,9) aufweist, die über einen Wandabschnitt (10) miteinander verbunden sind.

12. Aufbau nach Anspruch 11 und einem der Ansprüche 6 bis 10, **dadurch gekennzeichnet, dass** die Öffnungen (11) in den Wandabschnitt (10) eingeformt sind.

13. Aufbau nach einem der voranstehenden Ansprüche,
**dadurch gekennzeichnet, dass** die Länge des Sperrbalkens (12) mindestens einmal verstellbar ist.

14. Aufbau nach einem der voranstehenden Ansprüche,
**dadurch gekennzeichnet, dass** im Bereich der Endabschnitte des Sperrbalkens (12) jeweils ein Befestigungspunkt zum Ankoppeln des Spannmittels der Diagonalverzurrung (13) ausgebildet ist.

15. Aufbau nach einem der voranstehenden Ansprüche,
**dadurch gekennzeichnet, dass** die Diagonalverzurrung (13) als Spannmittel zwei Gurte, Seile (26a,26b) oder andere Bänder mit jeweils einer Spanneinrichtung umfasst und **dass** jedem Ende des Sperrbalkens (12) jeweils eines dieser Spannmittel zugeordnet ist.

16. Aufbau nach einem der voranstehenden Ansprüche,
**dadurch gekennzeichnet, dass** bei montiertem Sperrbalken (12) und montierter Diagonalverzurrung (13) die zum Befestigen des Spannmittels im Bereich der Ladefläche vorgesehenen Befestigungspunkte so angeordnet sind, dass die Spannmittel in Draufsicht unterhalb des Sperrbalkens (12) verlaufen.

17. Aufbau nach einem der voranstehenden Ansprüche,
**dadurch gekennzeichnet, dass** der Sperrbalken (12) unter Verwendung eines Hohlprofils hergestellt ist.

18. Aufbau nach Anspruch 17, **dadurch**
**gekennzeichnet, dass** das Hohlprofil endseitig Kopfstücke (21) trägt, die zum Ankoppeln des Sperrbalkens (12) an die dem jeweiligen Ende des Sperrbalkens (12) zugeordnete Einstecklatte (5a-5h) oder Runge (4a-4f) bestimmt sind.

19. Aufbau nach Anspruch 18, **dadurch**
**gekennzeichnet, dass** das Hohlprofil und die Kopfstücke (21) miteinander verschweißt oder verschraubt sind.

20. Aufbau nach einem der Ansprüche 1 bis 18, **dadurch**
**gekennzeichnet, dass** der Sperrbalken (12) im Bereich mindestens eines seiner Endabschnitte eine Führung (20) für das diesem Endabschnitt zugeordnete Kopfstück (21) aufweist.

21. Aufbau nach einem der voranstehenden Ansprüche,
**dadurch gekennzeichnet, dass** die Öffnungen (11) der Einstecklatten (5a-5h) eine Höhe (Ho) haben, die um ein Übermaß größer ist als die Höhe (Hv) des Vorsprungs (24), wobei das Übermaß ausreicht, um den Vorsprung (24) spielbehaftet in die Öffnungen (11) einführen zu können.

22. Aufbau nach einem der voranstehenden Ansprüche,
**dadurch gekennzeichnet, dass** die Öffnungen (11) rechtwinklig ausgebildet sind.

23. Aufbau nach einem der voranstehenden Ansprüche,
**dadurch gekennzeichnet, dass** das Kopfstück (21) versetzt zur Längsachse des Sperrbalkens (12) angeordnet ist.

## Claims

1. Structure for the loading platform (2) of a transport vehicle, in particular of a lorry or of a semi-trailer or trailer for a lorry, having uprights (4a-4f) spaced apart from one another and positioned along the loading platform (2), having side slats (5a-5h), arranged between the uprights (4a-4f) and aligned along the loading platform (2), which are supported with their head ends on the uprights (4a-4f), and having at least one locking bar (12) which extends transverse to the longitudinal direction (L) of the loading platform (2) and is arranged between the uprights (4a-4f) and/or side slats (5a-5h), wherein the locking bar (12) with each end is detachably connected in each case to a side slat (5a-5h) or an upright (4a-4f) and a diagonal bracing (13) is provided for bracing the locking bar (12), **characterised in that** the diagonal bracing is designed as a diagonal lashing (13) which is produced by two tightening means (26a, 26b) which can only be subjected to tension and which with their one end are in each case fastened to a fastening point formed in the loading platform area and with their other end are connected to the locking bar in such a way that their lines of action, viewed in the longitudinal direction of the loading platform, cross.

2. Structure according to Claim 1, **characterised in that** a first fastening point, arranged in the area of the one longitudinal side of the loading platform, is 2. Structure according to Claim 1, **characterised in that** a first fastening point, arranged in the area of the one longitudinal side of the loading platform, is assigned to the one tightening means (26a) and a second fastening point, arranged in the area of the other longitudinal side of the loading platform, is assigned to the other tightening means (26b).

3. Structure according to either of the preceding claims, **characterised in that** in each case one end of the tightening means (26a, 26b) is guided to one end of the locking bar.

4. Structure according to any one of the preceding claims, **characterised in that** the locking bar (12) is connected with a form-fit, in particular with a form-fit having clearance, to the side slats (5a-5h) or uprights (4a-4f) assigned to it in each case.

5. Structure according to Claim 4, **characterised in that** at least the side slats (5a-5h) assigned to the locking bar (12) have openings (11), in which the locking bar (12) grips with a hook-shaped projection (24) formed on it, in order to produce the form-fit connection with clearance.

6. Structure according to Claim 5, **characterised in that** the hook opening (25) encompassed by the hook-shaped projection (24) is dimensioned in such a way that the projection (24), with the locking bar (12) only connecting on one-side, grips with clearance (30, 31) behind the wall (10) delimiting the opening (11) of the respective side slat (5a-5h).

7. Structure according to Claim 6, **characterised in that** the projection (24) has a length (Lv) which, taking the length of the locking bar (12) into account and in combination with the clearance (30, 31), is sufficient to hook the hook-shaped projection (24) in the opening (11) of the side slat (5a-5h) or the upright (4a-4f) without using force, while the other end of the locking bar (12) rests on the loading platform (2) or - with a horizontally held locking bar (12) - the opposite end ends on the loading area side in front of the wall section (10) of the side slat (5a-5h).

8. Structure according to any one of Claims 5 to 7, **characterised in that** the side slats (5a-5h) assigned to the locking bar (12) have a plurality of openings (11) distributed along the side slats (5a-5h).

9. Structure according to Claim 8, **characterised in that** the openings (11) are arranged at regular intervals (A) apart.

10. Structure according to any one of the preceding claims, **characterised in that** the side slats (5a-5h) are formed as hollow profiles.

11. Structure according to Claim 10, **characterised in that** the side slats (5a-5h) have two box sections (8, 9) extending along the side slats (5a-5h) and arranged spaced apart from one another. These two box sections (8, 9) are connected to one another via a wall section (10).

12. Structure according to Claim 11 and any one of Claims 6 to 10, **characterised in that** the openings (11) are formed into the wall section (10).

13. Structure according to any one of the preceding claims, **characterised in that** the length of the locking bar (12) can be adjusted at least once.

14. Structure according to any one of the preceding claims, **characterised in that** a fastening point for coupling the tightening means of the diagonal lashing (13) is formed in the area of the end sections of the locking bar (12) in each case.

15. Structure according to any one of the preceding claims, **characterised in that** the diagonal lashing (13) comprises as tightening means two straps, ropes (26a, 26b) or other belts having a tightening device in each case, and **in that** one of these tightening means is assigned to each end of the locking bar (12) in each case.

16. Structure according to any one of the preceding claims, **characterised in that** when the locking bar (12) and the diagonal lashing (13) are fitted the fastening points, which are provided for fastening the tightening means in the loading platform area, are arranged in such a way that the tightening means in plan view run below the locking bar (12).

17. Structure according to any one of the preceding claims, **characterised in that** the locking bar (12) is produced using a hollow profile.

18. Structure according to Claim 17, **characterised in that** the hollow profile carries head pieces (21) on the ends, which are designed for coupling the locking bar (12) to the side slat (5a-5h) or upright (4a-4f) assigned to the respective end of the locking bar (12).

19. Structure according to Claim 18, **characterised in that** the hollow profile and the head pieces (21) are welded or screwed to one another.

20. Structure according to any one of Claims 1 to 18, **characterised in that** the locking bar (12) in the area of at least one of its end sections has a guide (20) for the head piece (21) assigned to this end section.

21. Structure according to any one of the preceding claims, **characterised in that** the openings (11) of the side slats (5a-5h) have a height (Ho) which is in excess of the height (Hv) of the projection (24), wherein the excess is sufficient to be able to insert the projection (24) into the openings (11) with clearance.

22. Structure according to any one of the preceding claims, **characterised in that** the openings (11) are rectangular.

23. Structure according to any one of the preceding claims, **characterised in that** the head piece (21) is arranged offset to the longitudinal axis of the locking bar (12).

## Revendications

1. Structure pour une surface de chargement (2) d'un véhicule automobile utilitaire, en particulier pour un camion ou une semi-remorque, respectivement une remorque d'un camion, qui comprend des ridelles (4a - 4f), disposées à distance les unes des autres, le long de la surface de chargement (2), des lattes insérables (5a - 5h), qui, disposées entre les ridelles (4a - 4f), le long de la surface de chargement (2), prennent appui sur lesdites ridelles (4a - 4f) avec leurs extrémités, côté tête, et au moins une barre de blocage (12), qui s'étend transversalement par rapport à la direction longitudinale (L) de la surface de chargement (2) et est disposée entre les ridelles (4a - 4f) et / ou les lattes insérables (5a - 5h), sachant que chacune des extrémités de la barre de blocage (12) est respectivement reliée, de manière amovible, à une latte insérable (5a - 5h) ou à une ridelle (4a - 4f) et qu'un système de serrage diagonal (13) est prévu pour le serrage de la barre de blocage (12), **caractérisée en ce que** le système de serrage diagonal est réalisé sous la forme d'un arrimage diagonal (13), consistant en deux moyens de serrage (26a, 26b), qui, pouvant être sollicités seulement par traction, sont fixés chacun, par l'une de leurs extrémités, à un point de fixation, qui est formé dans la région de la surface de chargement, et sont reliés, par leur autre extrémité, à la barre de blocage, de sorte que leurs lignes actives se croisent, vues dans la direction longitudinale de l'espace de chargement.

2. Structure selon la revendication 1, **caractérisée en ce qu'**à l'un des moyens de serrage (26a) est associé un premier point de fixation, qui est disposé dans la région de l'un des côtés longitudinaux de la surface de chargement, et qu'à l'autre moyen de serrage (26b) est associé un deuxième point de fixation, qui est disposé dans la région de l'autre côté longitudinal de la surface de chargement.

3. Structure selon l'une des revendications précédentes, **caractérisée en ce que** chacune des extrémités des moyens de serrage (26a, 26b) est conduite à une extrémité de la barre de blocage.

4. Structure selon l'une des revendications précédentes, **caractérisée en ce que** la barre de blocage (12) est reliée par emboîtement, en particulier par emboîtement avec jeu, aux lattes insérables (5a - 5h) ou aux ridelles (4a - 4f), qui lui sont respectivement associées.

5. Structure selon la revendication 4, **caractérisée en ce qu'**au moins les lattes insérables (5a - 5h) associées à la barre de blocage (12) sont dotées d'ouvertures (11), dans lesquelles la barre de blocage (12) s'engage avec une saillie (24) en forme de crochet, dont elle est équipée, pour réaliser la liaison par emboîtement avec jeu.

6. Structure selon la revendication 5, **caractérisée en ce que** l'ouverture (25) de la saillie en forme de crochet (24) est dimensionnée de sorte que la saillie (24) ne s'engage avec jeu derrière la paroi (10), qui limite l'ouverture (11) de la latte insérable respective (5a - 5h), que lors d'une liaison unilatérale de la barre de blocage (12).

7. Structure selon la revendication 6, **caractérisée en ce que** la saillie (24) présente une longueur, qui, compte tenu de la longueur de la barre de blocage (12) et en combinaison avec le jeu (30, 31), suffit pour que la saillie (24) en forme de crochet puisse être accrochée à force nulle dans l'ouvertures (11) de la latte insérable (5a - 5h) ou de la ridelle (4a - 4f), tandis que l'autre extrémité de la barre de blocage (12) repose sur la surface de chargement (2) ou que - lors d'une barre de blocage (12) maintenue horizontalement - l'extrémité opposée se termine, sur le côté de l'espace de chargement (2), devant la paroi (10) de la latte insérable (5a - 5h).

8. Structure selon l'une des revendications 5 à 7, **caractérisée en ce que** les lattes insérables (5a - 5h), associées à la barre de blocage (12), sont dotées d'une pluralité d'ouvertures (11), qui sont réparties le long desdites lattes insérables (5a - 5h).

9. Structure selon la revendication 8, **caractérisée en ce que** les ouvertures (11) sont disposées à intervalles réguliers (A).

10. Structure selon l'une des revendications précédentes, **caractérisée en ce que** les lattes insérables (5a - 5h) sont réalisées en forme de profilés creux.

11. Structure selon la revendication 10, **caractérisée en ce que** les lattes insérables (5a - 5h) présentent deux sections en forme de caissons (8, 9), qui, s'étendant le long des lattes insérables (5a - 5h) et étant distancées l'une de l'autre, sont reliées ensemble par l'intermédiaire d'une paroi (10).

12. Structure selon la revendication 11 et l'une des revendications 6 à 10, **caractérisée en ce que** les ouvertures (11) sont formées dans la paroi (10).

13. Structure selon l'une des revendications précédentes, **caractérisée en ce que** la longueur de la barre de blocage (12) peut être ajustée au moins une fois.

14. Structure selon l'une des revendications précédentes, **caractérisée en ce que**, dans la région de chacune des sections finales de la barre de blocage (12), est formé un point de fixation pour le couplage du moyen de serrage du système d'arrimage diagonal (13).

15. Structure selon l'une des revendications précédentes, **caractérisée en ce que** le système d'arrimage diagonal (13) comprend, en tant que moyens de serrage, deux sangles, cordes (26a, 26b) ou autres bandes, qui sont dotées chacune d'un dispositif de serrage, et qu'à chacune des extrémités de la barre de blocage (12) est associé l'un de ces moyens de serrage.

16. Structure selon l'une des revendications précédentes, **caractérisée en ce que**, quand la barre de blocage (12) et le dispositif d'arrimage diagonal (13) sont montés, les points de fixation, prévus dans la région de la surface de chargement pour la fixation des moyens de serrage, sont disposés de sorte que les moyens de serrage, vus d'en haut, s'étendent au-dessous de la barre de blocage (12).

17. Structure selon l'une des revendications précédentes, **caractérisée en ce que**, pour la réalisation de la barre de blocage (12), on utilise un profilé creux.

18. Structure selon la revendication 17, **caractérisée en ce que** le profilé creux porte, à l'extrémité, des pièces de tête (21), qui sont destinées au couplage de la barre de blocage (12) avec la latte insérable (5a - 5h) ou avec la ridelle (4a - 4f), respectivement associée à l'extrémité concernée de la barre de blocage (12).

19. Structure selon la revendication 18, **caractérisée en ce** le profilé creux et la pièce de tête (21) sont soudés ou vissés ensemble.

20. Structure selon l'une des revendications 1 à 18, **caractérisée en ce que** la barre de blocage (12) est dotée, dans la région d'au moins l'une de ses sections finales, d'un guidage (20) pour la pièce de tête (21) associée à cette section finale.

21. Structure selon l'une des revendications précédentes, **caractérisée en ce que** les ouvertures (11) des lattes insérables (5a - 5h) présentent une hauteur (Ho), qui est supérieure d'une surmesure à la hauteur (Hv) de la saillie (24), sachant que la surmesure est suffisante pour que la saillie (24) puisse être introduite avec jeu dans les ouvertures (11).

22. Structure selon l'une des revendications précédentes, **caractérisée en ce que** les ouvertures (11) sont formées à angles droits.

23. Structure selon l'une des revendications précédentes, **caractérisée en ce que** la pièce de tête (21) est disposée de manière décalée par rapport à l'axe longitudinal de la barre de blocage (12).
